# FASCICULE DE BREVET EUROPEEN

(11) **EP 1 744 926 B1**
(45) Date de publication et mention de la délivrance du brevet: **19.09.2007**
(21) Numéro de dépôt: 05740118.4
(22) Date de dépôt: 02.05.2005
(51) Int. Cl.: B60K 15/05, B62D 25/24, E05B 65/12

(54) **DISPOSITIF DE TRAPPE A CARBURANT POUR VEHICULE AUTOMOBILE**
KRAFTSTOFFKLAPPE FÜR EIN KRAFTFAHRZEUG
FUEL COVER FOR A MOTOR VEHICLE

(30) Priorité: 04.05.2004 FR 0404725
(43) Date de publication de la demande: 24.01.2007
(73) Titulaire: VALEO SECURITE HABITACLE S.A.S., 94042 Créteil Cédex (FR)
(72) Inventeur: CANARD, Louis, Valeo Securite Habitacle IP, F-94042 Créteil Cedex (FR); CALOR, Hervé, Valeo Securite Habitacle IP, F-94042 Créteil Cedex (FR); SERRE, Franck, Valeo Securite Habitacle IP, F-94042 Créteil Cedex (FR)
(86) Numéro de dépôt international: PCT/EP2005/051989
(87) Numéro de publication internationale: WO 2005/108145

(56) Documents cités:
- US-A- 3 930 388
- US-A- 5 676 416
- PATENT ABSTRACTS OF JAPAN vol. 1995, no. 10, 30 novembre 1995 (1995-11-30) & JP 07 172194 A (HINO MOTORS LTD), 11 juillet 1995 (1995-07-11)

## Description

La présente invention concerne un dispositif de trappe à carburant comportant un volet mobile qui est pourvu d'un organe de condamnation commandé par une serrure à barillet, tel que défini dans le préambule de la revendication 1 et connu par exemple du document JP 07172194.

L'invention trouve une application particulièrement avantageuse, mais non exclusive, dans le domaine des véhicules automobiles dotés de portes latérales coulissantes.

Il est connu d'utiliser une trappe mobile pour masquer l'orifice qui est ménagé à travers la carrosserie d'un véhicule automobile, afin de pouvoir accéder à la canalisation de remplissage du réservoir de carburant.

Parmi les différents dispositifs de trappes à carburant de l'état de la technique, on distingue ceux qui comportent un volet mobile doté d'un système de verrouillage dont la mise en oeuvre est commandée par une serrure à barillet.

La mobilité de ce volet non amovible s'exerce classiquement entre une position de fermeture dans laquelle ledit volet obture l'orifice d'accès au réservoir de carburant, et une position d'ouverture dans laquelle ce même volet libère l'accès audit orifice, depuis l'extérieur. Habituellement, en position de fermeture, le volet s'étend sensiblement dans le prolongement de la carrosserie du véhicule automobile, alors qu'en position d'ouverture, ledit volet est pivoté angulairement d'environ 90° vers l'extérieur.

Le système de condamnation comporte communément un organe qui est monté mobile en déplacement entre une position de verrouillage dans laquelle il est apte à bloquer le volet en position de fermeture, et une position de déverrouillage dans laquelle il est sans effet sur la mobilité dudit volet. L'ensemble est généralement agencé de manière à ce que la serrure à barillet, qui est solidaire du volet mobile, puisse commander le déplacement de l'organe de condamnation entre la position de verrouillage et la position de déverrouillage.

Dans la pratique, le volet mobile est en outre traditionnellement couplé à un ressort bistable qui est classiquement chargé de l'entraîner à la fois en ouverture et en fermeture, suivant que l'écart angulaire entre ledit volet et la carrosserie est respectivement supérieur ou inférieur à environ la moitié de la course de déplacement du volet. Cette caractéristique a essentiellement pour but de faciliter la mise en oeuvre de la trappe à carburant, en automatisant en quelque sorte les fins de phases d'ouverture et de fermeture.

Par ailleurs, les véhicules dotés de portes latérales coulissantes sont aujourd'hui de plus en plus nombreux. L'ouverture de ce type d'ouvrants s'effectue généralement par coulissement vers l'arrière, de sorte qu'il est relativement commun qu'une des portes soit amenée à se déplacer en regard et à proximité directe de la trappe à carburant.

Afin d'éviter que la porte coulissante concernée ne puisse entrer en collision avec la trappe à carburant lorsque celle-ci est ouverte, il est connu d'utiliser un capteur chargé de détecter et/ou de déterminer la position du volet mobile, en combinaison avec des moyens de blocage du déplacement de la porte. L'ensemble est agencé de manière à ce que les moyens de blocage en question soit en mesure d'immobiliser la porte latérale coulissante, dès lors que la trappe à carburant n'est pas fermée. Il est à noter que dans le cas où le coulissement de la porte est motorisé, le blocage du déplacement peut être réalisé très simplement en coupant l'alimentation du moteur électrique d'entraînement, ce qui revient en quelque sorte à court-circuiter l'interrupteur de commande qui est habituellement implanté à l'intérieur de l'habitacle du véhicule automobile.

Ce type de dispositif de trappe à carburant présente toutefois l'inconvénient de ne pas être totalement compatible avec l'utilisation d'une porte latérale coulissante. En effet, rien n'oblige l'utilisateur à retirer la clé du barillet de la serrure lorsque la trappe à carburant est fermée. Dans un tel cas, et si la porte est en outre sollicitée en ouverture, cette dernière va alors coulisser vers l'arrière et rentrer directement en collision avec la clé qui s'étend en saillie à la surface du volet mobile en position de fermeture. Il en résulte un risque important de détérioration pour la clé, mais aussi et plus indirectement, un risque non négligeable d'endommagement pour la trappe à carburant considérée dans son ensemble.

Aussi le problème technique à résoudre, par l'objet de la présente invention, est de proposer un dispositif de trappe à carburant pour véhicule automobile, comportant un volet mobile doté d'un organe de condamnation commandé par une serrure à barillet, le volet étant monté mobile en déplacement entre une position de fermeture dans laquelle il est apte à obturer un orifice ménagé à travers la carrosserie du véhicule automobile pour pouvoir accéder au réservoir de carburant, et une position d'ouverture dans laquelle il est apte à libérer l'accès audit orifice depuis l'extérieur, l'organe de condamnation étant monté mobile en déplacement entre une position de verrouillage dans laquelle il est apte à bloquer le volet en position de fermeture, et une position de déverrouillage dans laquelle il est sans effet sur la mobilité dudit volet, la serrure à barillet étant apte à commander le déplacement de l'organe de condamnation entre la position de verrouillage et la position de déverrouillage, dispositif de trappe à carburant qui permettrait d'éviter les problèmes de l'état de la technique en garantissant en toute circonstance l'intégrité de la clé qui lui est associée, et plus généralement celle dudit dispositif de trappe à carburant considéré dans son ensemble.

La solution au problème technique posé consiste, selon la présente invention, en ce que le dispositif de trappe à carburant comporte en outre des premiers moyens de rappel élastique aptes à entraîner l'organe de condamnation en position de déverrouillage lorsque ce dernier n'est pas bloqué en position de verrouillage par la serrure à barillet, des seconds moyens de rappel élastique aptes à entraîner le volet mobile en position d'ouverture lorsque ce dernier n'est pas bloqué en position de fermeture par l'organe de condamnation, ainsi que des moyens de détection aptes à déterminer la position dudit volet mobile.

L'action des premiers moyens de rappel élastique permet de libérer le volet mobile de manière automatique, dès lors que la serrure est déverrouillée par insertion de la clé dans le barillet. Il n'est ainsi pas nécessaire de faire tourner le barillet avec la clé pour commander le déplacement de l'organe de condamnation de la position de verrouillage à la position de déverrouillage.

La présence des seconds moyens de rappel élastique permet quant à elle d'ouvrir automatiquement le volet mobile, aussitôt que l'organe de condamnation est devenu inopérant. Il est à noter cependant que rien n'est prévu pour assister le retour du volet mobile en position de fermeture comme dans le cas des dispositifs de trappes à carburant de l'état de la technique précédemment évoqués.

Les moyens de détection sont eux chargés de fournir des informations permettant de gérer, en fonction de la position du volet mobile, la mise en oeuvre de la porte latérale coulissante qui est implantée à proximité de la trappe à carburant. Comme dans l'art antérieur, le dispositif de trappe à carburant selon l'invention est en effet lui aussi destiné à fonctionner en combinaison avec des moyens de blocage à même d'interdire le déplacement de l'ouvrant, dès lors que volet mobile n'est pas en position de fermeture.

L'invention telle qu'ainsi définie présente l'avantage d'être parfaitement compatible avec l'utilisation de porte latérale coulissante, puisqu'il est impossible d'oublier la clé sur la trappe à carburant après avoir verrouillé le volet mobile en position de fermeture. En effet, la seule possibilité de fermer la trappe de manière effective est d'extraire la clé du barillet de la serrure. A défaut, sous l'action successive des deux types de moyens de rappel élastique, l'organe de condamnation se désengage automatiquement puis le volet mobile s'ouvre inéluctablement, générant par conséquent le blocage de l'ouvrant dès lors que la position d'ouverture dudit volet mobile est détectée.

Ainsi donc, la probabilité de détériorer la clé lors de la mise en oeuvre d'une porte latérale coulissante, et conséquemment la probabilité d'endommager la trappe à carburant dans son ensemble, doivent désormais être considérées comme quasiment nulles même si l'ouvrant en question est destiné à être déplacé en regard et à proximité directe du dispositif de trappe à carburant selon l'invention.

Dans la pratique, en condition normale d'utilisation du véhicule automobile, la trappe est bien évidemment fermée et la serrure dépourvue de sa clé. Les moyens de détection indiquant que le volet mobile est bien en position de fermeture, rien ne vient entraver la mobilité de la porte latérale coulissante concernée.

L'ouverture de la trappe à carburant s'effectue avantageusement par simple insertion de la clé dans le barillet de la serrure. Il est à noter que le déverrouillage de la serrure qui en résulte est une opération tout à fait classique dans le domaine de la serrurerie, et c'est pourquoi elle ne sera pas décrite davantage ici. Quoi qu'il en soit, une fois le barillet libre en rotation par rapport à la partie statique de la serrure, rien ne vient plus bloquer l'organe de condamnation en position de verrouillage. Ce dernier peut donc être entraîné en déplacement vers la position de déverrouillage par les premiers moyens de rappel élastique, libérant par conséquent à son tour le volet mobile. L'action des seconds moyens de rappel élastique étant également permanente, cela entraîne l'ouverture automatique de la trappe à carburant. Une fois la position d'ouverture du volet mobile décelée par les moyens de détection, les moyens de blocage associés sont mis en oeuvre de manière à immobiliser la porte latérale coulissante concernée.

La fermeture de la trappe à carburant ne peut être réalisée qu'en trois temps. Il convient tout d'abord de pousser le volet mobile jusqu'à sa position de fermeture, à l'encontre de la force exercée par les seconds moyens de rappel élastique. Il s'agit ensuite de faire tourner le barillet de la serrure avec la clé, afin de commander le déplacement puis l'engagement de l'organe de condamnation. Il faut enfin retirer la clé en question de manière à verrouiller à nouveau la serrure, et ainsi bloquer l'organe de condamnation en position de verrouillage. Le volet mobile est alors immobilisé.

Par rapport aux dispositifs de l'art antérieur pris en considération, on note que la fermeture de la trappe à carburant n'est dans l'invention pas réalisée de manière automatique, ceci afin d'empêcher que le volet mobile ne puisse se rabattre tout seul avec la clé dessus.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels:
La figure 1 illustre en perspective et de manière partielle un dispositif de trappe à carburant conforme à l'invention.
La figure 2 est une coupe horizontale en perspective du dispositif de trappe à carburant de la figure 1.
La figure 3 montre en détail la serrure du dispositif de trappe à carburant des figures 1 et 2.
La figure 4 représente en détail l'organe de condamnation du dispositif de trappe à carburant des figures 1 à 3.
La figure 5 fait apparaître en détail le barillet de serrure du dispositif de trappe à carburant des figures 1 à 4.
La figure 6 illustre en détail la partie statique de la serrure du dispositif de trappe à carburant des figures 1 à 5.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

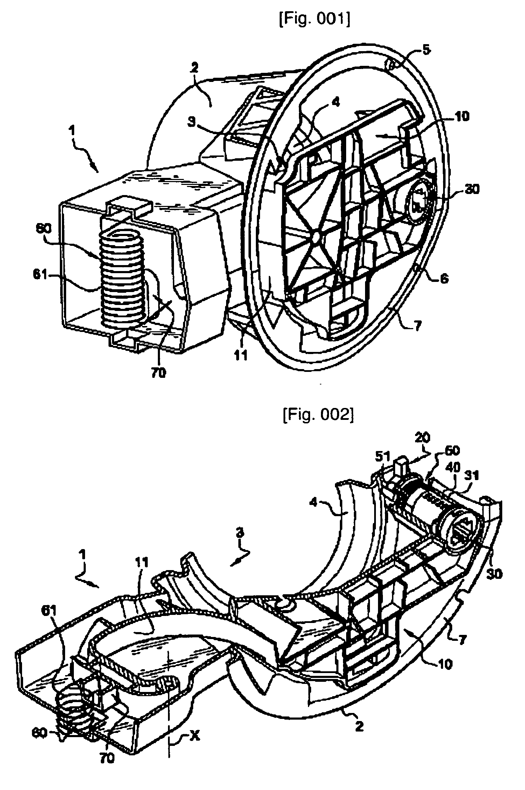

La figure 1 représente un dispositif de trappe à carburant 1 qui est destiné à équiper un véhicule automobile dont la carrosserie est par ailleurs dotée d'une porte latérale coulissante à même d'être déplacée en regard et à proximité directe de ladite trappe à carburant 1.

Dans ce mode particulier de réalisation, donné uniquement à titre d'exemple, le dispositif de trappe à carburant 1 se présente sous la forme d'un bol support 2 sur lequel est monté mobile un volet 10 qui est doté d'un organe de condamnation 20 commandé par une serrure 30 à barillet 40.

Ainsi qu'on peut le voir plus distinctement sur la coupe de la figure 2, le volet 10 est concrètement monté mobile en pivotement. A cet effet, il est constitué d'une pièce d'articulation 11 qui est montée horizontalement pivotante par rapport au bol support 2 autour d'un axe X, et qui supporte une pièce d'aspect extérieur non représentée ici pour d'évidentes raisons de clarté.

Dans cet exemple de réalisation, la mobilité du volet mobile 10 s'exerce entre une position de fermeture dans laquelle il obture l'ouverture du bol support 2, et une position d'ouverture dans laquelle il est pivoté angulairement de 90° vers l'extérieur. L'ensemble est agencé de manière à ce qu'une fois le dispositif de trappe à carburant 1 implanté dans le véhicule automobile, le volet 10 soit en mesure d'obturer l'orifice qui est ménagé à travers la carrosserie pour pouvoir accéder au réservoir de carburant, et une position d'ouverture dans laquelle il libère, depuis l'extérieur, l'accès audit orifice.

Afin qu'en position d'ouverture, le volet mobile 10 puisse s'étendre de manière sensiblement orthogonale par rapport à sa position de fermeture, la pièce d'articulation 11 présente une forme de col de cygne à proximité de son axe de rotation X (figure 2).

On observe également sur la figure 2 qu'un trou 3 est ménagé au fond du bol support 2 afin de pouvoir recevoir l'extrémité d'une canalisation de remplissage débouchant dans le réservoir de carburant du véhicule automobile. Un joint annulaire 4 est d'ailleurs prévu pour assurer l'étanchéité entre le bol support 2 et la canalisation de remplissage en question. Deux butées en élastomère 5, 6 sont en outre aménagées dans le but d'amortir tout contact entre le bord externe 7 du bol support 2 et la face interne de la pièce d'aspect du volet mobile 10.

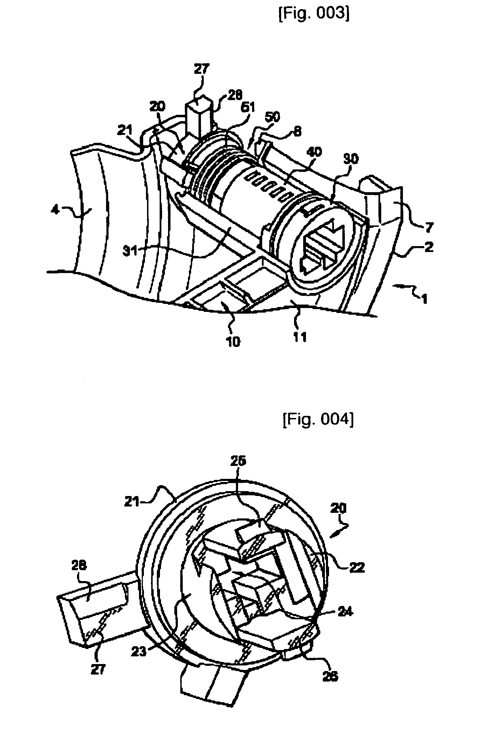

L'organe de condamnation 20, qui est d'ailleurs plus distinctement visible sur les figures 3 et 4, est quant à lui monté mobile en déplacement entre une position de verrouillage dans laquelle il est à même de bloquer le volet 10 en position de fermeture, et une position de déverrouillage dans laquelle il est sans effet sur la propre mobilité dudit volet 10 (figures 2 et 3).

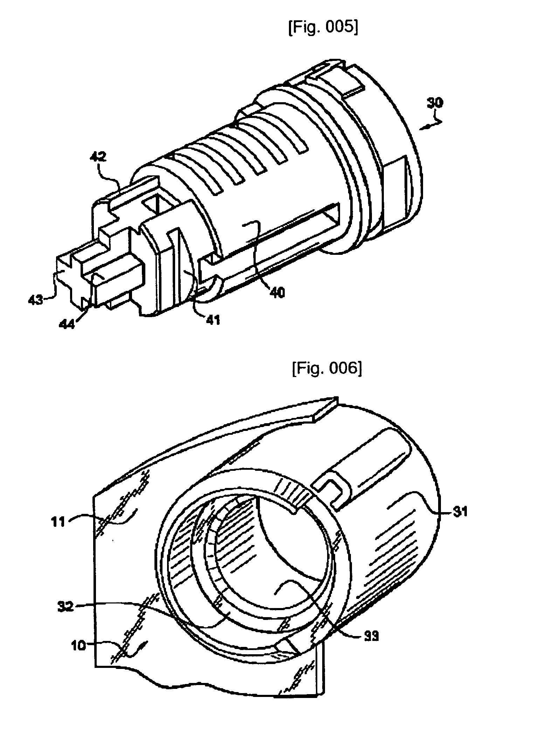

La serrure 30 à barillet 40, dont la partie rotor est par ailleurs représentée individuellement à la figure 5, est pour sa part montée sur le volet mobile 10 de manière à être en mesure de commander le déplacement de l'organe de condamnation 20 entre la position de verrouillage et la position de déverrouillage.

Conformément à l'objet de la présente invention, le dispositif de trappe à carburant 1 dispose par ailleurs de premiers moyens de rappel élastique 50 qui sont en mesure d'entraîner l'organe de condamnation 20 en position de déverrouillage lorsque ce dernier n'est pas bloqué en position de verrouillage par la serrure 30 à barillet 40. Le dispositif de trappe à carburant 1 est également pourvu de seconds moyens de rappel élastique 60 qui sont quant à eux à même d'entraîner le volet mobile 10 en position d'ouverture lorsque ce dernier n'est pas bloqué en position de fermeture par l'organe de condamnation 20. Le dispositif de trappe à carburant 1 comporte enfin des moyens de détection 70 qui sont aptes à déterminer la position du volet mobile 10.

Selon une particularité de l'invention visible aux figures 2 et 3, les premiers moyens de rappel élastique 50 sont ici constitués par un ressort de torsion 51 qui est en mesure d'entraîner en rotation l'organe de condamnation 20, de la position de verrouillage à la position de déverrouillage. L'ensemble est agencé de manière à ce que le ressort de torsion 51 sollicite en désengagement l'organe de condamnation 20 de manière permanente.

Cette caractéristique permet avant tout de garantir que, dès le déverrouillage de la serrure 30 par insertion de la clé, l'organe de condamnation 20 du volet mobile 10 sera bien désactivé systématiquement et de manière automatique quelle que soit sa position relative d'un point de vue angulaire. Mais de manière particulièrement avantageuse, cette caractéristique permet également d'éviter le jeu de l'organe de condamnation 20 que ce soit en position de verrouillage ou en position de déverrouillage, limitant ainsi les éventuels problèmes de vibrations.

De manière tout aussi avantageuse, l'organe de condamnation 20 se présente ici sous la forme d'une came rotative 21 qui est axialement solidaire du barillet 40 de la serrure 30. Cela signifie en d'autres termes que ces deux éléments sont reliés rigidement l'un à l'autre, mais qu'en plus l'axe de rotation de la came rotative 21 correspond à celui du barillet 40.

Dans cet exemple de réalisation, la came rotative 21 est solidarisée classiquement au barillet 30 par encliquetage de parties élastiquement déformables, conformément à la figure 3. Pour se faire, la came rotative 21 est pourvue de deux pattes d'assemblage 22, 23, formant crochets (figure 4), tandis que l'extrémité du barillet 40 est dotée de deux rainures d'ancrage 41, 42 de formes sensiblement complémentaires (figure 5). Le montage de l'ensemble s'effectue suivant une direction axiale, la section relativement faible des pattes d'assemblage 22, 23 conférant la capacité de déformation élastique nécessaire à l'encliquetage.

Par ailleurs, la transmission du couple de rotation entre le barillet 40 et la came rotative 21 est ici réalisée essentiellement par l'intermédiaire d'un emboîtement de parties rigides sensiblement complémentaires. Dans ce but, l'extrémité 43 la plus distale du barillet 40 présente un profil en croix 44 (figure 4) qui est à même de venir s'insérer dans un trou 24 de section sensiblement complémentaire, ménagé au centre de la came rotative 21 (figure 5). Le montage de l'ensemble s'effectue là aussi axialement, d'ailleurs suivant la même direction que celle de l'encliquetage.

Ainsi qu'on peut le voir notamment sur la figure 3, l'ensemble constitué du barillet 40 et de la came rotative 21 est monté libre en rotation axiale à l'intérieur d'un fût 31 qui est solidaire du volet mobile 10 et qui forme la partie stator de la serrure 30. Concrètement, le fût 31 est ménagé directement dans la pièce d'articulation 11, de manière sensiblement orthogonale au plan dans lequel doit s'étendre la pièce d'aspect du volet mobile 10.

Bien qu'il puisse tourner librement sur lui même, l'ensemble barillet 40/came rotative 21 est toutefois immobilisé axialement à l'intérieur du fût 31 par encliquetage élastiquement déformable. Pour cela, un épaulement 32 est ménagé au niveau de la surface interne 33 du fût 31, conformément à la figure 6. La came rotative 21 est quant à elle pourvue de deux nouvelles pattes d'assemblage 25, 26, formant crochets (figure 4), qui sont aptes à venir s'emboîter sur l'épaulement 32 après une très légère déformation élastique.

La partie saillante qui est destinée à venir coopérer par contact bloquant avec une surface d'appui 8 ménagée de manière adéquate sur le bol support 2, constitue la partie active 27 de la came rotative 21. A cet égard, on observe notamment sur les figures 3 et 4 que cette partie active 27 comporte un chanfrein 28 qui est à la fois destiné à faciliter son engagement lors de la condamnation du volet mobile 10, mais aussi à limiter les frottements au moment de son désengagement par rapport à la surface d'appui 8.

Selon une autre particularité de l'invention visible cette fois aux figures 1 et 2, les seconds moyens de rappel élastique 60 sont ici constitués d'un ressort de torsion 61 qui est à même d'entraîner en pivotement le volet mobile 10 de la position de fermeture à la position d'ouverture. Là encore, l'ensemble est agencé de manière à ce que le ressort de torsion 61 sollicite de manière permanente le volet mobile 10 en ouverture. Comme précédemment, cette caractéristique permet en outre avantageusement d'éviter le jeu du volet mobile 10, que ce soit en position de fermeture ou en position d'ouverture, limitant ainsi au maximum les éventuels problèmes de vibrations.

Conformément à une autre particularité de l'invention, les moyens de détection 70 sont en mesure de détecter au moins l'une des positions extrêmes du volet mobile 10, c'est-à-dire la position de fermeture et/ou la position d'ouverture.

Dans l'exemple de réalisation choisi, les moyens de détection 70 sont constitués par un capteur spécifiquement en mesure de détecter la position de fermeture du volet mobile 10 ; la position d'ouverture pouvant être aisément déduite dès lors que ledit capteur perd l'information comme quoi ledit volet mobile 10 est en position de fermeture. Evidemment, tout capteur connu de l'état de la technique peut bien entendu être utilisé en tant que moyens de détection 70.

Il est à noter que les moyens de détection 70 ont été représentés très schématiquement ici puisqu'ils sont analogues à ceux de l'art antérieur. Seules les finalités ultimes de leurs utilisations respectives sont différentes: Détection de la position de la trappe à carburant dans l'art antérieur, détection du retrait de la clé en ce qui concerne l'invention.

Bien entendu, l'invention concerne également tout véhicule automobile comportant au moins un dispositif de trappe à carburant 1 tel que précédemment décrit.

## Revendications

1. Dispositif de trappe à carburant (1) pour véhicule automobile, comportant un volet mobile (10) doté d'un organe de condamnation (20) commandé par une serrure (30) à barillet (40), le volet (10) étant monté mobile en déplacement entre une position de fermeture dans laquelle il est apte à obturer un orifice ménagé à travers la carrosserie du véhicule automobile pour pouvoir accéder au réservoir de carburant, et une position d'ouverture dans laquelle il est apte à libérer l'accès audit orifice depuis l'extérieur, l'organe de condamnation (20) étant monté mobile en déplacement entre une position de verrouillage dans laquelle il est apte à bloquer le volet (10) en position de fermeture, et une position de déverrouillage dans laquelle il est sans effet sur la mobilité dudit volet(10), la serrure (30) à barillet (40) étant apte à commander le déplacement de l'organe de condamnation (20) entre la position de verrouillage et la position de déverrouillage, **caractérisé en ce que** le dispositif de trappe à carburant (1) comporte en outre des premiers moyens de rappel élastique (50) aptes à entraîner l'organe de condamnation (20) en position de déverrouillage lorsque ce dernier n'est pas bloqué en position de verrouillage par la serrure (30) à barillet (40), des seconds moyens de rappel élastique (60) aptes à entraîner le volet mobile (10) en position d'ouverture lorsque ce dernier n'est pas bloqué en position de fermeture par l'organe de condamnation (20), ainsi que des moyens de détection (70) aptes à déterminer la position dudit volet mobile (10).

2. Dispositif de trappe à carburant (1) selon la revendication 1, **caractérisé en ce que** les premiers moyens de rappel élastique (50) comportent un ressort de torsion (51) qui est apte à entraîner en rotation l'organe de condamnation (20), de la position de verrouillage à la position de déverrouillage.

3. Dispositif de trappe à carburant (1) selon l'une des revendications 1 ou 2, **caractérisé en ce que** les seconds moyens de rappel élastique (60) comportent un ressort de torsion (61) qui est apte à entraîner en pivotement le volet mobile (10), de la position de fermeture à la position d'ouverture.

4. Dispositif de trappe à carburant (1) selon l'une quelconque des revendications 1 à 3, **caractérisé en ce que** les moyens de détection (70) sont aptes à détecter au moins l'une des positions extrêmes du volet mobile (10).

5. Dispositif de trappe à carburant (1) selon l'une quelconque des revendications 1 à 4, **caractérisé en ce que** l'organe de condamnation (20) comporte une came rotative (21) qui est axialement solidaire du barillet (40) de la serrure (30), l'axe de rotation de ladite came rotative (21) correspondant à l'axe de rotation dudit barillet (40).

6. Dispositif de trappe à carburant (1) selon l'une quelconque des revendications 1 à 5, **caractérisé en ce que** le volet mobile (10) est monté pivotant entre la position de fermeture et la position d'ouverture.

7. Véhicule automobile, **caractérisé en ce qu'**il comporte au moins un dispositif de trappe à carburant (1) selon l'une quelconque des revendications précédentes.

## Claims

1. Fuel trap device (1) for a motor vehicle comprising a movable vane (10) provided with a locking member (20) controllable by a cylinder (40) lock (30), wherein said vane (10) is movably assembled in such a way that it is displaceable between a closed position, in which it closes an orifice across the motor vehicle bodywork in order to reach the fuel tank, and an open position in which it is able to free the entry to said orifice from the outside; the locking member (20) is movably assembled in such a way that it is displaceable between a locked position, in which it is able to block the vane (10) in a closed position, and an unlocked position in which it has no effect on said vane (10), the cylinder (40) lock (30) controls the displacement of the locking member (20) between locked and unlocked positions, **characterised in that** the fuel trap device (1) also comprises first elastic return means (50) for driving the locking member (20) to the unlocked position when it is not blocked in a blocked position by the cylinder (40)lock (30), second elastic return means (60) for driving the movable vane (10) to the open position when it is not blocked in a closed position by the locking member (20), as well as sensor means (70) for determining the position of said movable vane (10).

2. Fuel trap device (1) according to claim 1, **characterised in that** the first elastic return mean (50) comprises a torsion spring (51) that causes the locking member to rotate (20), from locked to unlocked position.

3. Fuel trap device (1) according to one of the claims 1 or 2, **characterised in that** the second elastic return means (60) comprises a torsion spring (61) which causes the movable vane to pivot from a closed to open position.

4. Fuel trap device (1) according to any of the previous claims, **characterized in that** the sensor means (70) detect at least one of the furthest positions of the movable vane.

5. Fuel trap device (1) according to any of the previous claims, **characterized in that** the locking member (20) comprises a rotating cam (21) which is axially integral with the lock's cylinder (30), the axis of rotation of said rotating cam (21) corresponding to the axis of rotation of said cylinder (40).

6. Fuel trap device (1) according to any of the previous claims, **characterised in that** the movable vane (10) is assembled pivoting between the closed and open position.

7. Motor vehicle, **characterised in that** it comprises at least one fuel trap device (1) according to any of the previous claims.

## Patentansprüche

1. Kraftstoffverschlussvorrichtung (1) für Kraftfahrzeug, mit einer beweglichen Klappe (10), die mit einem Sperrorgan (20) versehen ist, das über ein Schloss (30) mit Zylinder (40) gesteuert ist, wobei die Klappe (10) zwischen einer Schließstellung, in welcher sie eine durch die Karosserie des Kraftfahrzeugs hindurch angebrachte Öffnung für den Zugang zum Kraftstofftank verschließen kann, und einer Öffnungsstellung, in welcher sie den Zugang von außen her zur Öffnung freigibt, beweglich verlagerbar ist, wobei das Sperrorgan (20) zwischen einer Verriegelungsstellung, in welcher es die Klappe (10) in der Schließstellung blockieren kann, und einer Entriegelungsstellung, in welcher es keine Wirkung auf die Beweglichkeit der Klappe (10) hat, beweglich verlagerbar ist, wobei das Schloss (30) mit Zylinder (40) das Verlagern des Sperrorgans (20) zwischen der Verriegelungsstellung und der Entriegelungsstellung steuern kann, **dadurch gekennzeichnet, dass** die Kraftstoffverschlussvorrichtung (1) zudem erste elastische Rückstellmittel (50), die das Sperrorgan (20) in die Entriegelungsstellung antreiben können, wenn dieses nicht in der Verriegelungsstellung durch das Schloss (30) mit Zylinder (40) blockiert ist, zweite elastische Rückstellmittel (60), die die bewegliche Klappe (10) in die Öffnungsstellung antreiben können, wenn diese nicht in der Schließstellung durch das Sperrorgan (20) blockiert ist, sowie Erfassungsmittel (70), die die Stellung der beweglichen Klappe (10) bestimmen können, aufweist.

2. Kraftstoffverschlussvorrichtung (1) nach Anspruch 1, **dadurch gekennzeichnet, dass** die ersten elastischen Rückstellmittel (50) eine Torsionsfeder (51) aufweisen, die das Sperrorgan (20) von der Verriegelungsstellung in die Entriegelungsstellung in Drehung antreiben können.

3. Kraftstoffverschlussvorrichtung (1) nach einem der Ansprüche 1 oder 2, **dadurch gekennzeichnet, dass** die zweiten elastischen Rückstellmittel (60) eine Torsionsfeder (61) aufweisen, die die bewegliche Klappe (10) von der Schließstellung in die Öffnungsstellung schwenkbar antreiben können.

4. Kraftstoffverschlussvorrichtung (1) nach einem der Ansprüche 1 bis 3, **dadurch gekennzeichnet, dass** die Erfassungsmittel (70) mindestens eine der Endstellungen der beweglichen Klappe (10) erfassen können.

5. Kraftstoffverschlussvorrichtung (1) nach einem der Ansprüche 1 bis 4, **dadurch gekennzeichnet, dass** das Sperrorgan (20) einen Drehnocken (21) aufweist, der axial mit dem Zylinder (40) des Schlosses (30) fest verbunden ist, wobei die Drehachse des Drehnockens (21) der Drehachse des Zylinders (40) entspricht.

6. Kraftstoffverschlussvorrichtung (1) nach einem der Ansprüche 1 bis 5, **dadurch gekennzeichnet, dass** die bewegliche Klappe (10) zwischen der Schließstellung und der Öffnungsstellung schwenkbar angebracht ist.

7. Kraftfahrzeug, **dadurch gekennzeichnet, dass** es mindestens eine Kraftstoffverschlussvorrichtung (1) nach einem der vorhergehenden Ansprüche aufweist.
